(19) Europäisches Patentamt
European Patent Office
Office européen des brevets

(11) **EP 4 300 839 A1**

(12) **EUROPEAN PATENT APPLICATION**
published in accordance with Art. 153(4) EPC

(43) Date of publication:
**03.01.2024 Bulletin 2024/01**

(21) Application number: **22758863.9**

(22) Date of filing: **22.02.2022**

(51) International Patent Classification (IPC):
**H04B 7/04** $^{(2017.01)}$       **H04L 25/02** $^{(2006.01)}$

(52) Cooperative Patent Classification (CPC):
**H04B 7/04; H04L 5/00; H04L 25/02; H04W 24/02**

(86) International application number:
**PCT/CN2022/077271**

(87) International publication number:
**WO 2022/179499 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.02.2021 CN 202110201300**

(71) Applicant: **Vivo Mobile Communication Co., Ltd.
Dongguan, Guangdong 523863 (CN)**

(72) Inventors:
• **YANG, Kun**
  **Dongguan, Guangdong 523863 (CN)**
• **JIANG, Dajie**
  **Dongguan, Guangdong 523863 (CN)**
• **LIU, Hao**
  **Dongguan, Guangdong 523863 (CN)**

(74) Representative: **Carangelo, Pierluigi et al
Jacobacci & Partners S.p.A.
Via Tomacelli 146
00186 Roma (IT)**

(54) **CHANNEL INFORMATION ACQUISITION METHOD AND APPARATUS, AND COMMUNICATION DEVICE**

(57) This application discloses a channel information obtaining method and apparatus, and a communication device, and pertains to the field of wireless communication technologies. The channel information obtaining method includes: measuring, by a first device, first channel information in a plurality of time units in a first time period; and obtaining, by the first device, second channel information of each third device in the first time period according to the first channel information obtained through measurement in each time unit and according to a first code word of each third device in the first time period, where the second channel information is channel information obtained after each third device forwards, to the first device, a radio signal sent by a second device, where the radio signal is forwarded by the third device according to the first code word of the third device in the first time period, the first code word includes a plurality of elements, each element corresponds to one time unit, and first code words of different third devices are different in the first time period.

200                                                    S210

┌─────────────────────────────────────────────────┐
│ A first device measures first channel information │
│ in a plurality of time units in a first time      │
│ period                                            │
└─────────────────────────────────────────────────┘
                         │
                         ▼                          S212
┌─────────────────────────────────────────────────┐
│ The first device obtains second channel           │
│ information of each third device in the first     │
│ time period according to the first channel        │
│ information obtained through measurement in each  │
│ time unit and according to a first code word of   │
│ each third device in the first time period        │
└─────────────────────────────────────────────────┘

FIG. 2

EP 4 300 839 A1

## Description

## CROSS-REFERENCE OF RELATED APPLICATION

The present invention claims priority to Chinese Patent Application No. 202110201300.6, filed with the China National Intellectual Property Administration on February 23, 2021, and entitled "CHANNEL INFORMATION OBTAINING METHOD AND APPARATUS, AND COMMUNICATION DEVICE", which is incorporated herein by reference in its entirety.

## TECHNICAL FIELD

This application pertains to the field of wireless communications technologies, and specifically relates to a channel information obtaining method and apparatus, and a communication device.

## BACKGROUND

Special wireless auxiliary devices in a wireless environment (for example, a relay device, a backscatter (backscatter) device, a new device, a large intelligent surface device, and a satellite) have a function of changing electromagnetic parameters of the wireless auxiliary devices, thereby affecting a channel situation between communication devices. A signal to interference plus noise ratio (signal-to-noise and interference ratio, SINR) or a channel response changes with electromagnetic parameters and hardware characteristics of these special devices, so that the channel response is updated accordingly.

The wireless auxiliary device may be transparent to a communication terminal. That is, a forwarding signal of the wireless auxiliary device and a radio signal of another propagation path are superposed to reach the communication terminal. Therefore, the communication terminal cannot distinguish the forwarding signal of the wireless auxiliary device, and therefore cannot accurately feed back channel quality of the wireless auxiliary device. In addition, if a plurality of wireless auxiliary devices in the environment serve the terminal, the terminal cannot distinguish signals of different wireless auxiliary devices, and consequently channel information of each wireless auxiliary device cannot be estimated.

## SUMMARY

Embodiments of this application provide a channel information obtaining method and apparatus, and a communication device, to resolve a problem that channel information of each wireless auxiliary device cannot be estimated because signals of different wireless auxiliary devices cannot be distinguished.

According to a first aspect, a channel information obtaining method is provided, including: measuring, by a first device, first channel information in a plurality of time units in a first time period; and obtaining, by the first device, second channel information of each third device in the first time period according to the first channel information obtained through measurement in each time unit and according to a first code word of each third device in the first time period, where the second channel information is channel information obtained after each third device forwards, to the first device, a radio signal sent by a second device, where the radio signal is forwarded by the third device according to the first code word of the third device in the first time period, the first code word includes a plurality of elements, each element corresponds to one time unit, and first code words of different third devices are different in the first time period.

According to a second aspect, a signal sending method is provided, including: determining, by a third device, a first code word in a first time period; and forwarding, by the third device, a radio signal from a second device in each time unit in the first time period according to a state corresponding to each element of the first code word, where the first code word includes a plurality of elements, each element corresponds to one time unit, and first code words of different third devices are different in the first time period.

According to a third aspect, a parameter configuration method is provided, including: obtaining, by a second device, a device parameter of at least one third device; and configuring, by the second device, second configuration information for each third device according to the device parameter of each third device, where the second configuration information includes a time period for executing a first code word, a time unit corresponding to each element of the first code word, a sequence of the first code word, and a target parameter of a forwarding beam during execution of the first code word, and first code words of different third devices are different.

According to a fourth aspect, a channel information obtaining apparatus is provided, where the apparatus is applied to a first device and includes: a measurement module, configured to measure first channel information in a plurality of time units in a first time period; and a first obtaining module, configured to obtain second channel information of each third device in the first time period according to the first channel information obtained through measurement in each time unit and according to a first code word of each third device in the first time period, where the second channel information is channel information obtained after each third device forwards, to the first device, a radio signal sent by a second device, where the radio signal is forwarded by the third device according to the first code word of the third device in the first time period, the first code word includes a plurality of elements, each element corresponds to one time unit, and first code words of different third devices are different in the first time period.

According to a fifth aspect, a signal sending apparatus is provided, where the apparatus is applied to a third device and includes: a first determining module, configured to determine a first code word in a first time period; and a forwarding module, configured to forward a radio signal from a second device in each time unit in the first time period according to a state corresponding to each element of the first code word, where the first code word includes a plurality of elements, each element corresponds to one time unit, and first code words of different third devices are different in the first time period.

According to a sixth aspect, a parameter configuration apparatus is provided, where the apparatus is applied to a second device and includes: a second obtaining module, configured to obtain a device parameter of at least one third device; and a configuration module, configured to configure second configuration information for each third device according to the device parameter of each third device, where the second configuration information includes a time period for executing a first code word, a time unit corresponding to each element of the first code word, a sequence of the first code word, and a target parameter of a forwarding beam during execution of the first code word, and first code words of different third devices are different.

According to a seventh aspect, a communication device is provided. The communication device includes a processor, a memory, and a program or an instruction stored in the memory and executable on the processor, and when the program or the instruction is executed by the processor, the steps of the method in the first aspect or the steps of the method in the second aspect or the steps of the method in the third aspect are implemented.

According to an eighth aspect, a readable storage medium is provided. The readable storage medium stores a program or an instruction, and when the program or the instruction is executed by a processor, the steps of the method in the first aspect or the steps of the method in the second aspect or the steps of the method in the third aspect are implemented.

According to a ninth aspect, a chip is provided. The chip includes a processor and a communication interface, the communication interface is coupled to the processor, and the processor is configured to execute a program or an instruction of a communication device to implement the steps of the method in the first aspect or the steps of the method in the second aspect or the steps of the method in the third aspect.

According to a tenth aspect, a computer program product is provided. The computer program product includes a processor, a memory, and a program or an instruction stored in the memory and executable on the processor, and when the program or the instruction is executed by the processor, the steps of the method in the first aspect or the steps of the method in the second aspect or the steps of the method in the third aspect are implemented.

In the embodiments of this application, a third device forwards, according to a first code word of the third device in a first time period, a radio signal sent by a second device, so that a first device can decompose, according to the first code word of each third device in the first time period, first channel information obtained through measurement, to obtain second channel information of each third device in the first time period. In this way, a problem in the prior art that channel information of each wireless auxiliary device cannot be estimated because signals of different wireless auxiliary devices cannot be distinguished is resolved.

**BRIEF DESCRIPTION OF DRAWINGS**

FIG. 1 is a schematic diagram of a wireless communication system to which embodiments of this application can be applied;

FIG. 2 is a schematic flowchart of a channel information obtaining method according to an embodiment of this application;

FIG. 3 is a schematic flowchart of a signal sending method according to an embodiment of this application;

FIG. 4 is a schematic flowchart of a parameter configuration method according to an embodiment of this application;

FIG. 5 is a schematic flowchart of a channel information obtaining method according to an embodiment of this application;

FIG. 6 shows a schematic diagram of signal sending according to an embodiment of this application;

FIG. 7 is a schematic flowchart of a channel information obtaining method according to an embodiment of this application;

FIG. 8 is a schematic flowchart of a channel information obtaining method according to an embodiment of this application;

FIG. 9 shows a schematic diagram of signal sending according to an embodiment of this application;

FIG. 10 is a schematic flowchart of a channel information obtaining method according to an embodiment of this application;

FIG. 11 is a schematic structural diagram of a channel information obtaining apparatus according to an embodiment of this application;

FIG. 12 is a schematic structural diagram of a signal sending apparatus according to an embodiment of this application;

FIG. 13 is a schematic structural diagram of a parameter configuration apparatus according to an embodiment of this application;

FIG. 14 is a schematic structural diagram of a communication device according to an embodiment of this application;

FIG. 15 is a schematic diagram of a hardware structure of a terminal according to an embodiment of this application; and

FIG. 16 is a schematic diagram of a hardware structure of a network side device according to an embodiment of this application.

## DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communication system.

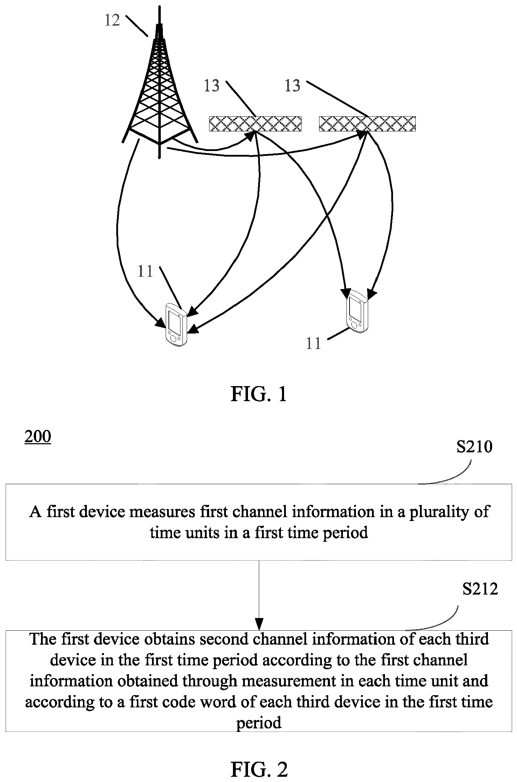

FIG. 1 is a schematic diagram of a wireless communication system to which embodiments of this application can be applied. The wireless communication system includes a terminal 11, a wireless auxiliary device 13, and a network side device 12. The terminal 11 may also be referred to as a terminal device or user equipment (User Equipment, UE). The terminal 11 may be a terminal side device such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network, and the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, WiFi) node, a transmitting receiving point (Transmitting Receiving Point, TRP), or another suitable term in the art, provided that a same technical effect is achieved. The base station is not limited to a specific technical term. The wireless auxiliary device 13 may be a large intelligent surface (Large Intelligent Surfaces, LIS), or may be a layer 1 (L1) relay device, or may be an L1 repeater (repeater) or reflector (backscatter). A large intelligent surface device is also referred to as an intelligent reflected surface (Intelligent Reflected Surface), an intelligent super surface, a programmable/reconstructed super surface, and the like. A target wireless auxiliary device may have a beamforming function, or may not have a beamforming function. It should be noted that, in the embodiments of this application, only a base station in an NR system is used as an example, but a specific type of the base station is not limited.

With reference to the accompanying drawings, channel information obtaining solutions provided in the embodiments of this application are described in detail by using specific embodiments and application scenes.

FIG. 2 is a schematic flowchart of a channel information obtaining method according to an embodiment of this application. The method 200 may be performed by a first device. In other words, the method may be performed by software or hardware installed in the first device. As shown in FIG. 2, the method may include the following steps.

S210. A first device measures first channel information in a plurality of time units in a first time period.

In a possible implementation, the first device may be a terminal, a second device may be a base station, and a third device may be a wireless auxiliary device.

In this possible implementation, in addition to a control circuit for controlling a phase or an amplitude, the wireless auxiliary device may include only a passive component.

In another possible implementation, the first device and the second device may be a transmitting module and a receiving module of a same base station. For example, the base station has a full-duplex transceiver function, or the transmitting module and the receiving module of the base station are deployed at different locations and/or have specific isolation, so that a signal from the third device can be accurately detected. Alternatively, the first device and the second device may be other terminal devices that may send a measurement signal to the third device. In this possible implementation, the third device may carry information about the third device by using a radio frequency signal reflecting another device, and the third device is both a reflector and a signal source. For example, the third device may be a reflector.

In this embodiment of this application, the first channel information measured by the first device is a channel estimation result of a radio signal from the second device and a radio signal that is sent by the second device to the third device and that is forwarded by the third device to the first device.

For example, in the wireless communication system shown in FIG. 1, the first device may be the terminal 11. The first channel information measured by the terminal 11 includes channel information from the base station 12 to the terminal 11 and channel information from the base station 12 to the wireless auxiliary device 13 and from the wireless auxiliary device 13 to the terminal 11.

In this embodiment of this application, one time unit may be one or more orthogonal frequency division multiplexing (Orthogonal frequency division multiplex, OFDM) symbols, or may be one or more slots or half slots. Specifically, this may be determined according to actual application, and is not specifically limited in this embodiment of this application.

S212. The first device obtains second channel information of each third device in the first time period according to the first channel information obtained through measurement in each time unit and according to a first code word of each third device in the first time period, where the second channel information is channel information obtained after each third device forwards, to the first device, a radio signal sent by a second device.

The first code word is a sequence of a plurality of elements arranged in sequence, and each element is selected from a predefined element set. The element set corresponds to a combination of controllable channel parameters of the third device. For example, the element set is {-1, +1}, where +1 corresponds to a forwarding state 1 of a phase-controlled intelligent surface, and -1 corresponds to a case that the forwarding state 1 of the phase-controlled intelligent surface is increased by a 180-degree phase offset.

The first code word is selected from a first code word set. The first code word set is a set of first code words that can be selected in the system. Any code word greater than one code word in the first code word set needs to meet orthogonality, that is, a system of linear equations constructed based on any code word greater than one code word has a unique solution, so that it is ensured that a channel measurement result of the third device configured based on the first code word to obtain unique channel measurement information.

In specific implementation, the first code word may be an orthogonal cover code (Orthogonal Cover Code, OCC). For example, an OCC code word set is an OCC code word set whose length is 4: [+1, +1, +1, +1], [+1, +1, -1, -1], [+1, -1, +1, -1], [+1, -1, -1, +1]. The code word [+1, +1, +1, and +1] may be a reserved code word, and is configured for a third device that does not obtain channel information.

In this embodiment of this application, the radio signal is forwarded by the third device according to the first code word of the third device in the first time period, the first code word includes a plurality of elements, each element corresponds to one time unit, and first code words of different third devices are different in the first time period.

In this embodiment of this application, the third device superimposes identification information of the third device on the forwarded signal by using the first code word. The first code word includes a plurality of elements, and different element values correspond to different target parameters. Therefore, when forwarding a radio signal on each time unit, the third device forwards the radio signal according to a target parameter corresponding to an element of a first code word corresponding to the time unit.

A 1-bit phase-controlled intelligent surface device is used as an example. The intelligent surface device assists a base station in communication, forwards a radio signal sent by the base station, and superimposes identification information of the intelligent surface device on the forwarded radio signal. When an element value in the first code word changes from 1 to -1, 1-bit inversion occurs on all component units in the intelligent surface device, and a phase of a reflected signal is correspondingly superposed by 180 degrees and spatial energy distribution of the reflected signal does not change. The terminal may obtain superposition information of the intelligent surface device according to a situation of detecting a phase change in a multipath channel. Through this feature, the intelligent surface device may decompose channel information based on orthogonality of the first code word.

For example, for a phase-controlled intelligent surface, a 1-bit phase-controlled intelligent surface is used as an example. A bit 0 (a state -1) corresponds to a 0-degree phase offset, and a bit 1 (a state +1) corresponds to a 180-degree phase offset. For an intelligent surface 1, a radio channel corresponding to the intelligent surface 1 is $h_1$ in a state 0 and is $-h_1$ in a state 1 because 180-degree phase rotation is superposed. Similarly, a radio channel corresponding to an intelligent surface 2 is $h_2$ in a state 0 and is $-h_2$ in a state 1. For a device that does not participate in code word configuration or a signal detected by using another propagation path, a corresponding channel is $h_0$. In a first time period, a first code word of the intelligent surface 1 is: +1, +1, -1, and -1, and a first code word of the intelligent surface 2 is: +1, -1, +1, and -1, where +1 and -1 indicate a beam phase offset situation in a case that the intelligent surface is fixed in a direction of a forwarding beam. For example, +1 represents a 0-degree offset and -1 represents a 180-degree offset. For a radio signal on a first OFDM symbol (or a first time unit) of a reference signal (Reference Signal, RS) sent by a base station, if an offset of the intelligent surface 1 is 0 degrees and an offset of the intelligent surface 2 is 0 degrees, a channel estimation result of the terminal is $H_1 = h_0 + h_1 + h_2$. For a second OFDM symbol of the RS, if the offset of the intelligent surface 1 is 0 degrees and the offset of the intelligent surface 2 is 180 degrees, the channel estimation result of the terminal is $H_2 = h_0 + h_1 - h_2$. By analogy, the channel estimation result of the terminal is $H_3 = h_0 - h_1 + h_2$ and $H_4 = h_0 - h_1 - h_2$. Information components corresponding to the intelligent surface of the radio channel may be obtained through decomposing according to channel information measured at the foregoing four moments, that is,

$$\mathrm{h}_0 = \frac{1}{4}(H_1 + H_2 + H_3 + H_4)$$

$$\mathrm{h}_1 = \frac{1}{4}(H_1 + H_2 - H_3 - H_4)\text{, and}$$

$$\mathrm{h}_2 = \frac{1}{4}(H_1 - H_2 + H_3 - H_4).$$

For another example, for an amplitude-controlled intelligent surface, a 1-bit amplitude-controlled intelligent surface is used as an example. A bit 0 (a state -1) corresponds to that energy of a reflected signal/an outgoing signal is 0, and a bit 1 (a state +1) corresponds to that energy of a reflected signal/an outgoing signal is 1. For an intelligent surface 1, a radio channel corresponding to the intelligent surface 1 is $h_1$ in a state 1 and is 0 in a state 0. Similarly, a radio channel corresponding to an intelligent surface 2 is $h_2$ in a state 1 and is 0 in a state 0. In a first time period, a first code word of the intelligent surface 1 is: +1, +1, -1, and -1, and a first code word of the intelligent surface 2 is: +1, -1, +1, and -1, where +1 and -1 indicate a beam energy situation in a case that the intelligent surface is fixed in a direction of a forwarding beam. For a first OFDM symbol (or a first time unit) of an RS, if energy of the intelligent surface 1 is 0 and signal energy of the intelligent surface 2 is 0, a channel estimation result of the terminal is $H_1 = h_0$. For a second OFDM symbol of the RS, if the energy of the intelligent surface 1 is 0 and the energy of the intelligent surface 2 is 1, the channel estimation result of the terminal is $H_2 = h_0 + h_2$. By analogy, the channel estimation result of the terminal is $H_3 = h_0 + h_1$ and $H_4 = h_0 + h_1 + h_2$. Information components corresponding to the intelligent surface of the radio channel may be obtained through decomposing according to channel information measured at the foregoing four moments (For the amplitude-controlled intelligent surface, H4 is optional or may be used as a check result, and channel information of each intelligent surface can be determined through the first three times of measurement).

For another example, according to a configuration of a base station, a bit 0 (a state -1) of an intelligent surface corresponds to a beam 0 of the intelligent surface (a random state of the beam is used to forward a signal, or the beam 0 is used to forward a signal, where strength of the signal from the beam 0 to the terminal is relatively weak, or the beam 0 implements uniformly distributed forwarding of signal energy in each direction), and a bit 1 (a state +1) corresponds to a measured beam 1. In a first time period, a first code word of an intelligent surface 1 is: +1, +1, -1, and -1, and a first code word of an intelligent surface 2 is: +1, -1, +1, and -1, where +1 and -1 indicate a situation of a forwarding beam of the intelligent surface. For a first OFDM symbol (or a first time unit) of an RS, if a forwarding beam of the intelligent surface 1 is the beam 1 and a forwarding beam of the intelligent surface 2 is the beam 1, a channel estimation result of the terminal is $H_1 = h_0$. For a second OFDM symbol of the RS, if the forwarding beam of the intelligent surface 1 is the beam 1 and the forwarding beam of the intelligent surface 2 is the beam 0, the channel estimation result of the terminal is $H_2 = h_0 + h_2$. By analogy, the channel estimation result of the terminal is $H_3 = h_0 + h_1$ and $H_4 = h_0 + h_1 + h_2$. Information components corresponding to the intelligent surface of the radio channel may be obtained through decomposing according to channel information measured at the foregoing four moments.

Although the foregoing enumerated examples are described by using 1-bit control as an example, this is not limited thereto. In specific application, the elements in the first code word may alternatively correspond to 2-bit or 3-bit control information, or the like. This may be specifically determined according to a quantity of third devices in the wireless communication system and/or a time unit included in the first time period, and is not limited in this embodiment of this application.

In this embodiment of this application, there is a specific time interval between the plurality of time units. Because the third device may need to switch different states (that is, target parameters) in different time units, to enable the third device to forward a radio signal in different states in two consecutive time units, in a possible implementation, the time interval between the plurality of time units is greater than a time required for state switching of the third device.

In a possible implementation of this embodiment of this application, before S210, the method may further include: determining the first code word of each third device in the first time period. In specific application, the first device may prestore the first code word of each third device in each first time period, or the first code word may be configured by the second device, or may be implicitly indicated by a device identifier of the third device.

Therefore, in a possible implementation, the determining the first code word of each third device in the first time period may include: receiving first configuration information sent by the second device, and determining the first code word of each third device in the first time period according to the first configuration information, where the first configuration information includes at least one of the following: a length of the first code word, each to-be-detected first code word, a device identifier of a third device corresponding to each first code word, and a correspondence between an element of the first code word and a target parameter of a forwarding beam of the third device.

Optionally, the first configuration information further includes time domain information of the first channel information, and the time domain information is used to indicate the plurality of time units.

For example, when a base station (the second device) configures a parameter of a reference signal for a terminal (the first device), a configuration parameter of the reference signal includes original bandwidth, a frequency domain density, a time domain occupation resource, and a reference signal sequence that are of the reference signal, and related configuration information of the first code word further needs to be configured, including one of the following parameters: a length of the first code word, a to-be-detected first code word, a number of an intelligent surface corresponding to each first code word, and a correspondence between each element of the first code word and a target parameter of a beam of the intelligent surface. The configuration information needs to ensure that at least one reference signal is used for channel measurement in a time unit corresponding to each element in the configured code word.

Alternatively, in another possible implementation, the determining the first code word of each third device in the first time period may include: determining the first code word of each third device in the first time period according to the device identifier of each third device. That is, the first code word may be obtained by using the device identifier of the third device. For example, a codebook may be prestored in the first device, and the first device selects a code word from the codebook for each third device by using the device identifier of the third device, where the code word is the first code word of the third device. In this manner, a configuration parameter configured by the second device for the third device can be reduced.

In the foregoing possible implementation, all third devices in the wireless communication system may not be awakened. Therefore, when determining the first code word of each third device, only a first code word of an awakened third device may be determined. Therefore, in a possible implementation, the determining the first code word of each third device according to the device identifier of each third device includes: determining the first code word of each third device according to the device identifier of each third device and an identifier carried in a received wake-up signal, where the wake-up signal is used to wake up at least one third device. In this possible implementation, the wake-up signal is a special sequence, and only a third device detected according to a corresponding sequence is awakened. Therefore, the first device may determine, according to the currently received wake-up signal, which third devices are awakened, to select a first code word from the codebook for each awakened third device according to the awakened third devices.

In this embodiment of this application, the target parameter includes at least one of the following: a phase, an amplitude, and a beam, and values of target parameters corresponding to different elements are different. For example, in the foregoing enumerated examples, the target parameter is a phase, an amplitude, a polarization direction, a frequency, or a beam. However, this is not limited thereto, and the target parameter may be any combination of two or more of the phase, the amplitude, the polarization direction, and the beam.

To improve reliability of channel estimation, in a possible implementation, after S212, the method may further include: performing joint estimation on second channel information of each third device in a plurality of first time periods to obtain target channel information of each third device. For example, for each third device, joint estimation such as interpolation and averaging is performed on second channel information in a corresponding time period in different first time periods (that is, a channel measurement validity time), to obtain the target channel information of each third device.

In the foregoing possible implementation, after the obtaining target channel information of each third device, the method may further include: sending feedback information to the second device in a preset manner, where the feedback information includes at least one of the following: an identifier of the third device, the target channel information of the third device, and a state of a target parameter of the third device corresponding to the target channel information. The preset manner may be preconfigured by the second device or predefined in the protocol, to avoid a direct feedback from the first device. In this possible implementation, the feedback information is fed back to the second device, so that the second device can optimize a beamforming configuration parameter of each third device based on the feedback information.

For example, a phase-controlled intelligent surface is used as an example. The first device determines, according to a channel measurement result in the first time period, that a channel corresponding to an intelligent surface device 1 is $h_1$ in a state 0, and the first device may feed back an identifier of the intelligent surface device 1 and indication information of the channel information $h_1$ and the state 0 to the second device. Optionally, a default device state may be defined in advance by using configuration information of the first code word or predefined in the protocol, and the first device feeds back channel information corresponding to the default device state.

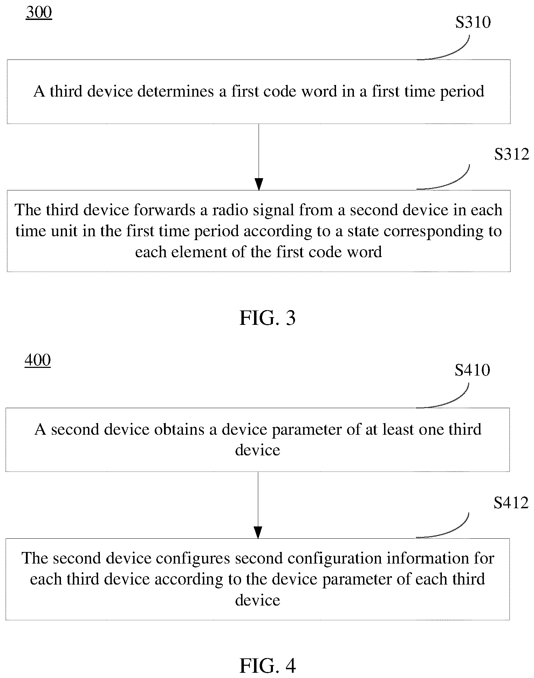

FIG. 3 is a schematic flowchart of a signal sending method according to an embodiment of this application. The method 300 may be performed by a third device. In other words, the method may be performed by software or hardware installed in the third device. As shown in FIG. 3, the method may include the following steps.

S310. A third device determines a first code word in a first time period.

The third device is the same as the third device in the method 200. For details, refer to the related descriptions in the method 200.

The first code word is the same as the first code word in the method 200. For details, refer to the related descriptions in the method 200. Details are not described herein again.

In a possible implementation, the determining, by a third device, a first code word in a first time period includes: receiving, by the third device, second configuration information sent by the second device, and determining the first code word in the first time period according to the second configuration information, where the second configuration information includes a time period for executing the first code word, a time unit corresponding to each element of the first code word, a sequence of the first code word, and a target parameter of a forwarding beam during execution of the first code word. Optionally, the second configuration information may further include a codebook (that is, a set of a plurality of first code words); a fixed parameter of a forwarding beam (for example, a direction of the forwarding beam) during forwarding of a signal according to a first code word; and a quantization manner, that is, information such as a working state of a third device corresponding to each element.

Alternatively, in another possible implementation, the determining, by a third device, a first code word in a first time period may include: determining the first code word according to a device identifier of the third device. For example, a first codebook of the third device may be selected from codebooks according to the device identifier of the third device.

In the foregoing possible implementation, the third device may determine the first code word when being awakened. Therefore, optionally, the determining the first code word according to a device identifier of the third device may include: after a wake-up signal from the second device is received, determining the first code word according to an identifier carried in the wake-up signal and the device identifier of the third device, where the wake-up signal is used to wake up the third device. In specific application, the second device may wake up different third devices by using different sequences. A third device can only detect a wake-up sequence corresponding to the third device and is awakened by the wake-up sequence, and a same wake-up sequence may wake up a plurality of third devices. Alternatively, the wake-up signal includes a wake-up identifier, and a third device that matches the wake-up identifier is activated and works according to the second configuration information. For example, the wake-up identifier is a third device group number, and a third device in a third device group corresponding to the number is activated.

S312. The third device forwards a radio signal from a second device in each time unit in the first time period according to a state corresponding to each element of the first code word, where the first code word includes a plurality of elements, each element corresponds to one time unit, and first code words of different third devices are different in the first time period.

In this embodiment of this application, different element values in the first code word correspond to different target parameters of the signal forwarded by the third device, and each element may correspond to 1-bit control information, 2-bit control information, or more flexible control information. This is not specifically limited in this embodiment of this application.

For example, for a phase-controlled intelligent surface, a 1-bit phase-controlled intelligent surface is used as an example. A bit 0 (a state -1) corresponds to a 0-degree phase offset, and a bit 1 (a state +1) corresponds to a 180-degree phase offset. In a first time period, a first code word of an intelligent surface 1 is: +1, +1, -1, -1, and a first code word of an intelligent surface 2 is: +1, -1, +1, -1, where +1 and -1 indicate a beam phase offset situation in a case that the intelligent surface is fixed in a direction of a forwarding beam. For example, +1 represents a 0-degree offset and -1 represents a 180-degree offset. For a radio signal on a first OFDM symbol (or a first time unit) of a reference signal (Reference Signal, RS) sent by a base station, an offset of the intelligent surface 1 is 0 degrees and an offset of the intelligent surface 2 is 0 degrees. For a second OFDM symbol of the RS, the offset of the intelligent surface 1 is 0 degrees and the offset of the intelligent surface 2 is 180 degrees, and so on.

For another example, for an amplitude-controlled intelligent surface, a 1-bit amplitude-controlled intelligent surface is used as an example. A bit 0 (a state -1) corresponds to that energy of a reflected signal/an outgoing signal is 0, and a bit 1 (a state +1) corresponds to that energy of a reflected signal/an outgoing signal is 1. In a first time period, a first code word of an intelligent surface 1 is: +1, +1, -1, -1, and a first code word of an intelligent surface 2 is: +1, -1, +1, -1, where +1 and -1 indicate a beam energy situation in a case that the intelligent surface is fixed in a direction of a forwarding beam. For a first OFDM symbol (or a first time unit) of an RS, energy of the intelligent surface 1 is 0 and signal energy of the intelligent surface 2 is 0. For a second OFDM symbol of the RS, the energy of the intelligent surface 1 is 0 and the energy of the intelligent surface 2 is 1, and so on.

For another example, according to a configuration of a base station, a bit 0 (a state -1) of an intelligent surface corresponds to a beam 0 of the intelligent surface (a random state of the beam is used to forward a signal, or the beam 0 is used to forward a signal, where strength of the signal from the beam 0 to the terminal is relatively weak, or the beam 0 implements uniformly distributed forwarding of signal energy in each direction), and a bit 1 (a state +1) corresponds to a measured beam 1. In a first time period, a first code word of an intelligent surface 1 is: +1, +1, -1, -1, and a first code word of an intelligent surface 2 is: +1, -1, +1, -1, where +1 and -1 indicate a situation of a forwarding beam of the intelligent surface. For a first OFDM symbol (or a first time unit) of an RS, a forwarding beam of the intelligent surface 1 is the beam 1 and a forwarding beam of the intelligent surface 2 is the beam 1. For a second OFDM symbol of the RS, the forwarding beam of the intelligent surface 1 is the beam 1 and the forwarding beam of the intelligent surface 2 is the beam 0, and so on.

FIG. 4 is a schematic flowchart of a parameter configuration method according to an embodiment of this application. The method 400 may be performed by a second device. In other words, the method may be performed by software or hardware installed in the second device. As shown in FIG. 4, the method may include the following steps.

S410. A second device obtains a device parameter of at least one third device.

The second device and the third device are the same as the second device and the third device in the method 200 and the method 300. For details, refer to the related descriptions in the method 200 and the method 300.

In this embodiment of this application, the second device may communicate with the third device through a specific interface, which may be specifically implemented in a wireless or wired form.

The second device may obtain a quantity of forwarding beams of the third device, parameters of a radio signal controlled by the third device (for example, a phase, an amplitude, and a polarization direction), quantization precision of a control parameter of the third device (that is, a quantity of bits for controlling one unit of the third device), and a forwarding beam switching time of the third device. It should be noted that the foregoing parameters may be different according to different third devices, or may be constrained through protocol predefinition.

In addition, through an interface, the third device performs row switching to ensure synchronization with the second device, thereby ensuring alignment with a frame structure or a symbol boundary.

S412. The second device configures second configuration information for each third device according to the device parameter of each third device, where the second configuration information includes a time period for executing a first code word, a time unit corresponding to each element of the first code word, a sequence of the first code word, and a target parameter of a forwarding beam during execution of the first code word, and first code words of different third devices are different.

The third device may perform, according to the second configuration information configured by the second device, signal forwarding in the manner described in the foregoing method 300. For details, refer to the descriptions in the method 300. Details are not described herein again.

In a possible implementation, the configuring, by the second device, second configuration information for each third device according to the device parameter of each third device includes: selecting a first code word of each third device according to a code word selection rule, and determining a target parameter corresponding to each time unit in a first time period. For example, the second device may perform conversion according to the device identifier of the third device, and then select the first code word for each third device from a preset codebook according to a conversion result.

In a possible implementation, after S410, the method may further include: sending first configuration information to a first device, where the first configuration information includes time domain information of a first reference signal, and the time domain information indicates that a plurality of time units are the same as time units corresponding to elements in the first code word.

In the foregoing possible implementation, the first reference signal may be a sounding reference signal (Sounding Reference Signal, SRS). The first configuration information is sent to the first device, and the first device may send an SRS according to the first configuration information. Therefore, in a possible implementation, after the sending first configuration information to a first device, the method further includes: receiving the first reference signal in each time unit; and obtaining third channel information of each third device according to the first reference signal received in each time unit and the first code word of each third device, where the third channel information is channel information obtained after each third device forwards, to the first device, the first reference signal sent by the first device.

In the foregoing possible implementation, the first device sends a reference signal, at least one reference signal may be included in one time unit, and a parameter of a forwarding beam of the third device in one time unit remains unchanged. There is a time interval between time units, and the time interval is greater than a time for state switching of the third device, and may be cyclic prefixes (Cyclic Prefix, CP) of several symbols or OFDM symbols. In different time units, the parameter of the forwarding beam of the third device is determined by a corresponding element of the first code word. Time units of a plurality of consecutive reference signals may be combined into a complete channel measurement validity time (that is, the first time period).

The second device receives a reference signal in each time unit and obtains channel information; and then processes the channel information of each time unit according to the first code word to obtain channel information corresponding to different third devices. Optionally, the second device performs joint estimation (interpolation, weighted averaging, and the like) on channel information in a corresponding time period in different channel measurement validity times to increase reliability of channel estimation. Therefore, a beamforming configuration parameter of each third device may be optimized based on the obtained channel information corresponding to each third device.

In another implementation, the first reference signal may be an RS, and the first configuration information is the same as the first configuration information in the method 200, that is, the first configuration information may further include at least one of the following: a length of the first code word, each to-be-detected first code word, a device identifier of a third device corresponding to each first code word, and a correspondence between an element of the first code word and a target parameter of a transmit beam of the third device.

In the foregoing possible implementation, after the sending first configuration information to a first device, the method may further include: sending the first reference signal in each time unit; and receiving feedback information sent by the first device, where the feedback information includes at least one of the following: an identifier of the third device, target channel information of the third device, and a state of a target parameter of the third device corresponding to the target channel information. That is, after sending the first configuration information, the second device sends the first reference signal in each time unit according to the first configuration information. The first device obtains the target channel information of each third device in the manner described in the method 200, and sends the feedback information to the second device, so that the second device obtains the channel information corresponding to each third device, and can optimize the beamforming configuration parameter of each third device based on the channel information corresponding to each third device.

According to the foregoing method provided in this embodiment of this application, a third device may forward a signal according to a time forwarding rule of a first code word configured by a first device, so that identification information of the third device can be superposed in the forwarded signal. In this way, a second device or the first device may obtain channel information corresponding to each third device, thereby optimizing a beamforming configuration parameter of each third device.

The following describes the technical solutions provided in the embodiments of this application by using specific embodiments.

**Embodiment 1**

In this embodiment, an example in which a first device is a terminal, a second device is a base station, and a third device is an intelligent surface device is used for description.

In this embodiment, in addition to a control circuit for controlling a phase or an amplitude of each unit of the intelligent surface device, the intelligent surface device includes only a passive component.

In this embodiment, a first code word is an OCC code word.

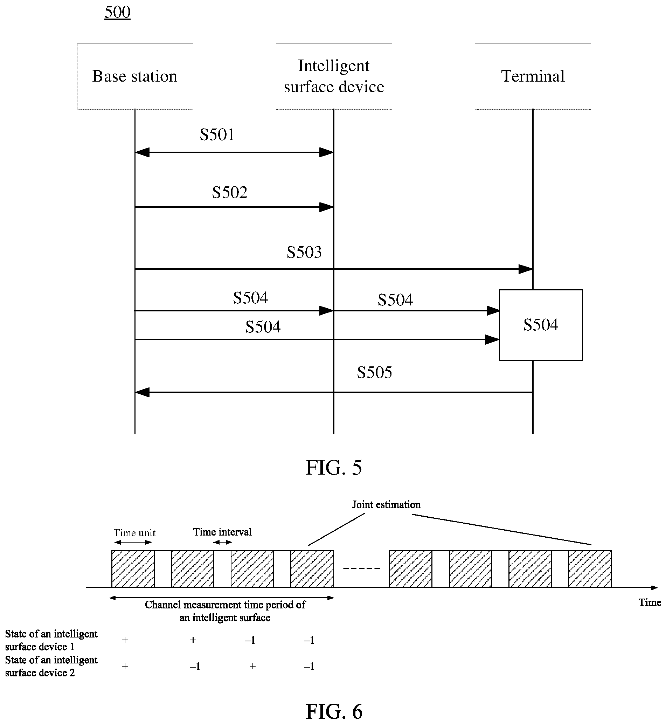

FIG. 5 is a schematic flowchart of a channel information obtaining method according to an embodiment of this application. As shown in FIG. 5, the method 500 may be performed by a base station, a terminal, and an intelligent surface device. In other words, the method may be performed by software or hardware installed in the base station, the terminal, and the intelligent surface device. As shown in FIG. 5, the method may include the following steps.

S501. A base station obtains a device parameter of an intelligent surface device.

The base station communicates with the intelligent surface device through a specific interface, which may be specifically implemented in a wireless or wired form.

The base station may obtain a quantity of forwarding beams of the intelligent surface device, parameters of a radio signal controlled by the intelligent surface device (a phase, an amplitude, a polarization direction, and a frequency), quantization precision of a control parameter of the intelligent surface device (that is, a quantity of bits for controlling one unit of the intelligent surface device), and a forwarding beam switching time of the intelligent surface device. It should be noted that the foregoing parameters may be different according to different intelligent surface devices, or may be constrained through protocol predefinition.

Through an interface, the intelligent surface device may perform row switching to ensure synchronization with a network side, thereby ensuring alignment with a frame structure or a symbol boundary.

S502. The base station configures a parameter of an OCC for the intelligent surface device.

The parameter configured by the base station for the intelligent surface device may include: a time period for executing the OCC, a time unit corresponding to each element of the OCC code word, a sequence of the OCC (including an OCC codebook/code word set, a length, a control type, and a quantization manner), and a fixed parameter of a forwarding beam (a direction of the forwarding beam) of the intelligent surface device during execution of the OCC.

Optionally, the OCC code word may be selected from a preset OCC codebook according to a conversion result obtained through implicit conversion by using an ID of the intelligent surface device. For example, if the identifier of the intelligent surface device is an ID and a quantity of available code words of the OCC codebook is N, when the base station configures the terminal to measure channel information of the intelligent surface, the system may select to determine a code word number n by using a specific mapping function, for example, n=ID mod N. The intelligent surface device performs a signal forwarding operation by using a code word numbered n.

S503. The base station configures a parameter of a reference signal for a terminal.

In addition to original bandwidth, a frequency domain density, a time domain occupation resource, and a reference signal sequence that are of the reference signal, the configuration parameter of the reference signal configured by the base station for the terminal may further include related configuration information of the OCC. The related configuration information of the OCC may include at least one of the following parameters: a length of the OCC code word, a to-be-detected OCC code word, a number of an intelligent surface device corresponding to each OCC code word, and a correspondence between an element of the OCC code word and a parameter of a beam of the intelligent surface device.

S504. The base station sends the reference signal, the intelligent surface device forwards the reference signal, and the terminal receives the reference signal to perform channel estimation.

As shown in FIG. 6, the base station sends a reference signal, and in one time unit, at least one reference signal may be included in one time unit, the plurality of reference signals have a same transmit beam, and a parameter of a forwarding beam of the intelligent surface device in one time unit remains unchanged. There is a time interval between time units, and the time interval is greater than a time for state switching of the intelligent surface device, and may be CPs of several symbols or OFDM symbols. In different time units, the parameter of the forwarding beam of the intelligent surface device is determined by a corresponding element of the OCC code word. A plurality of consecutive time units are combined into a complete channel measurement validity time. Generally, to ensure measurement timeliness, a plurality of time units are configured continuously, and a total time length is less than a channel coherence time.

The terminal receives a reference signal in each time unit by using a same receive beam, to obtain channel information; and processes the channel information of each time unit according to the OCC code word to obtain channel information of different third devices. Optionally, the terminal performs joint estimation (interpolation and averaging) on channel information in a corresponding time period in different channel measurement validity times to increase reliability of channel estimation.

S505. The terminal feeds back a channel detection result.

The terminal feeds back the channel information corresponding to each intelligent surface device to the base station. The feedback information may include at least one piece of the following information: an identifier of the intelligent surface device or the OCC code word, a state of the intelligent surface device, and channel information corresponding to the state. A part of the foregoing information may be preconfigured by the base station or predefined in the protocol, to avoid a direct feedback.

It should be noted that the foregoing method provided in this embodiment may be combined with another channel estimation procedure to improve accuracy of the channel estimation procedure. A training procedure of analog beam scanning is used as an example. In different measurement time periods, the intelligent surface device uses different forwarding beams, so that the plurality of intelligent surface devices can simultaneously perform beam training.

In addition, if there are a plurality of intelligent surface devices in an environment, and the base station only needs to measure channel information corresponding to several intelligent surface devices (for example, measures channel information of two intelligent surface devices), an OCC code word other than a full 0 code word is configured for the two to-be-measured intelligent surface devices (or another code word equivalent to the full 0 code word), and a full 0 code word (or another code word equivalent to the full 0 code word) is configured for an intelligent surface device that does not need to be measured.

## Embodiment 2

A difference between this embodiment and Embodiment 1 lies in that in this embodiment, a base station performs channel measurement based on an uplink reference signal, that is, a terminal sends a plurality of SRSs, and the base station receives the plurality of SRSs to determine superposed channel information corresponding to an intelligent surface device in different states, so as to determine a channel situation corresponding to each intelligent surface device.

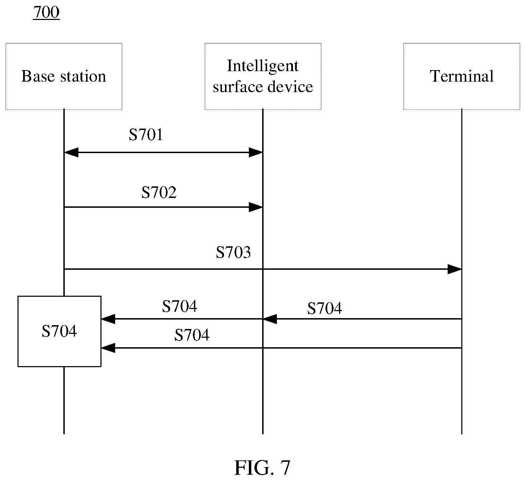

FIG. 7 is a schematic flowchart of a channel information obtaining method according to an embodiment of this application. As shown in FIG. 7, the method 700 may be performed by a base station, a terminal, and an intelligent surface device. In other words, the method may be performed by software or hardware installed in the base station, the terminal, and the intelligent surface device. As shown in FIG. 7, the method may include the following steps.

S701. A base station obtains a device parameter of an intelligent surface device.

The base station may communicate with the intelligent surface device through a specific interface, which may be specifically implemented in a wireless or wired form.

The base station may obtain a quantity of forwarding beams of the intelligent surface device, parameters of a radio signal controlled by the intelligent surface device (a phase, an amplitude, a frequency, a polarization direction, and the like), quantization precision of a control parameter of the intelligent surface device (that is, a quantity of bits for controlling one unit of the intelligent surface device), and a forwarding beam switching time of the intelligent surface device. It should be noted that the foregoing parameters may be different according to different intelligent surface devices, or may be constrained through protocol predefinition.

Through an interface, the intelligent surface device may perform row switching to ensure synchronization with a network side, thereby ensuring alignment with a frame structure or a symbol boundary.

S702. The base station configures a parameter of an OCC for the intelligent surface device.

The configured parameter includes a time period for executing the OCC, a time period corresponding to each element of the OCC code word, a sequence of the OCC (including an OCC codebook/code word set, a length, a control type, and a quantization manner), and a fixed parameter of a forwarding beam (a direction of the forwarding beam) of the intelligent surface device during execution of the OCC.

Optionally, the OCC code word may be selected from a preset OCC codebook according to a conversion result obtained through implicit conversion by using an ID of the intelligent surface device.

S703. The base station configures a parameter of a reference signal for a terminal.

The configuration parameter of the reference signal may include bandwidth, a frequency domain density, a time domain occupation resource, and a reference signal sequence that are of the reference signal (for example, an SRS or a demodulation reference signal (Demodulation Reference Signal, DMRS) corresponding to an uplink PUSCH). The time domain occupation resource of the reference signal corresponds to a related OCC code word configuration of the intelligent surface device. The time domain occupation resource includes a plurality of uplink reference signal sending occasions; and a quantity of uplink reference signal sending occasions should be greater than or equal to a length of an OCC code word, and there is at least one uplink reference signal sending occasion in a time unit of the intelligent surface device corresponding to each element of the OCC code word.

Optionally, the uplink reference signal is sent periodically, and a sending period of the uplink reference signal is the same as an execution period of the OCC code word of the intelligent surface device.

In an uplink reference signal sending period, the terminal sends the uplink reference signal on a configured time domain occupation resource by using a same transmit beam.

S704. The terminal sends the reference signal, the intelligent surface device forwards the reference signal, and the base station receives the reference signal to perform channel estimation.

The terminal sends a reference signal, at least one reference signal may be included in one time unit, and a parameter of a forwarding beam of the intelligent surface device in one time unit remains unchanged. There is a time interval between time units, and the time interval is greater than a time for state switching of the intelligent surface device, and may be CPs of several symbols or OFDM symbols. In different time units, the parameter of the forwarding beam of the intelligent surface device is determined by a corresponding element of the OCC code word. A plurality of consecutive time units may be combined into a complete channel measurement validity time (that is, a first time period, that is, a period for periodic sending).

The base station receives a reference signal in each time unit to obtain channel information; and processes the channel information of each time unit according to the OCC code word to obtain information of different channels. Optionally, the base station performs joint estimation (interpolation and averaging) on channel information in a corresponding time period in different channel measurement validity times to increase reliability of channel estimation.

In particular, if there are a plurality of intelligent surface devices in an environment, and the base station only needs to measure channel information corresponding to several intelligent surface devices (for example, measures channel information of two intelligent surface devices), an OCC code word other than a full 0 code word is configured for the two to-be-measured intelligent surface devices (or another code word equivalent to the full 0 code word), and a full 0 code word (or another code word equivalent to the full 0 code word) is configured for an intelligent surface device that does not need to be measured.

In particular, for a time division duplex (Time Division Duplex, TDD) communication system, the plurality of time units may be a combination of a downlink time unit and an uplink time unit. With reference to Embodiment 1 and Embodiment 2, a channel measurement procedure of mixed uplink and downlink signals is implemented. The terminal reports channel measurement information of the downlink time unit to the base station, and the base station determines channel information corresponding to the intelligent surface according to uplink channel information and downlink channel information.

**Embodiment 3**

When a network needs to support a large quantity of backscatter passive devices to access communication at the same time, a channel of each backscatter device needs to be estimated. Similarly, a backscatter does not have a baseband or a radio frequency processing module, and information about the backscatter is carried by using a radio frequency signal that reflects another device.

Different from Embodiment 1, in this embodiment, the backscatter is both a reflector and a signal source.

When obtaining channel information of a plurality of backscatters simultaneously, a base station may also implement simultaneous measurement based on the technical solution provided in this embodiment of this application.

In this embodiment, the base station has a full-duplex transceiver function, or a transmit end and a receive end of the base station are deployed at different locations and/or have specific isolation, so that a signal of the backscatter can be accurately detected.

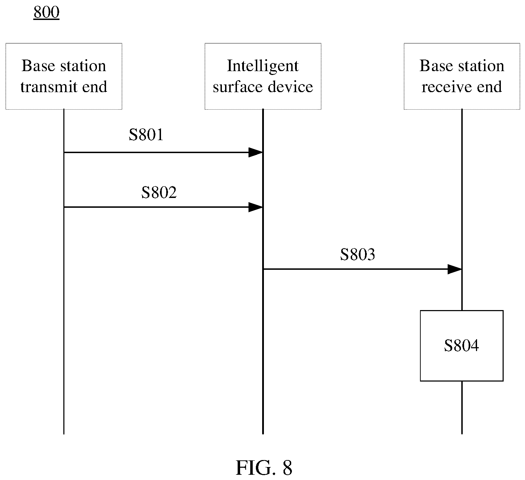

FIG. 8 is a schematic flowchart of a channel information obtaining method according to an embodiment of this application. As shown in FIG. 8, the method 800 may be performed by a transmit end of a base station, a transmit end of the base station, and a backscatter. In other words, the method may be performed by software or hardware installed in the transmit end of the base station, the transmit end of the base station, and the backscatter.

As shown in FIG. 8, the method may include the following steps.

S801. A transmit end of a base station (or another device such as a mobile phone) sends a specific signal to wake up a plurality of backscatter devices.

This step is an optional step.

S802. The transmit end of the base station sends a reference signal to measure a channel situation of a backscatter device.

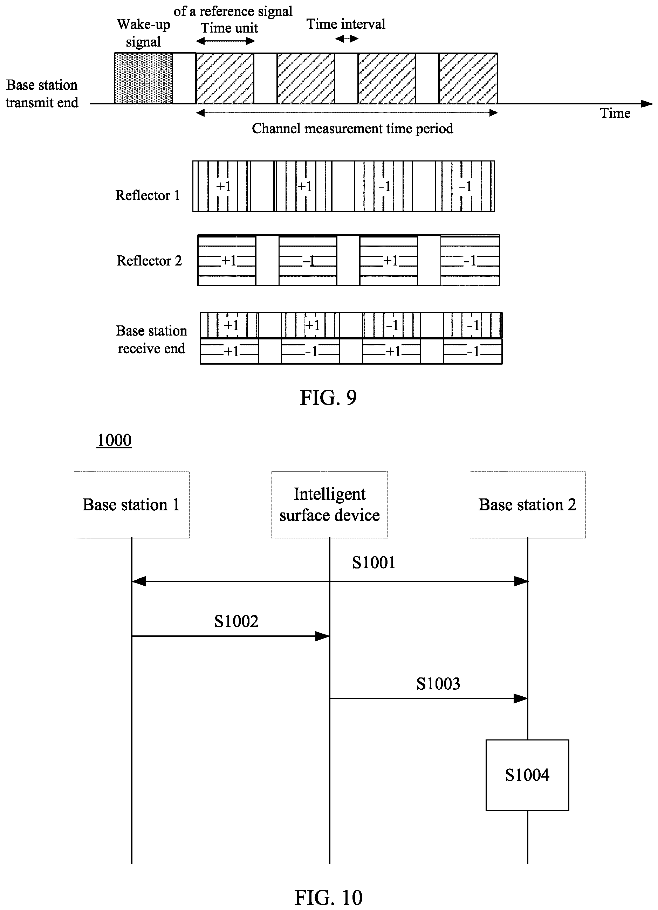

As shown in FIG. 9, the reference signal is sent within a period of time after a specific wake-up signal. The reference signal lasts for a period of time, and includes several time units. Each time unit corresponds to one element of an OCC code word.

S803. The backscatter device determines an OCC code word of the backscatter device according to a device identifier, to ensure that different devices use different OCC code words, and forwards, according to the OCC code word of the backscatter device, the signal sent by the transmit end of the base station.

Optionally, selection of the OCC code word may be jointly determined based on an identifier carried in the wake-up signal and the device identifier of the backscatter.

S804. A receive end of the base station distinguishes different backscatters and/or obtains channel state information of different backscatter devices according to different OCC code words.

The receive end of the base station determines, by using extracted channel information of the OCC code word, whether the OCC code word has a corresponding backscatter device. If the extracted channel information of the OCC code word is too small, it is considered that no backscatter device uses the OCC code word, that is, no backscatter device corresponds to the OCC code word.

Due to different state switching and transmission delays of the backscatter devices, a specified time interval needs to be used. Therefore, a signal within the time interval may not be used as data for channel estimation.

**Embodiment 4**

Different from Embodiment 3, in this embodiment, a base station (base station 1) that sends a signal and a base station (base station 2) that receives a reflected signal of a backscatter are two different base stations, and are deployed at different locations. In particular, the base station 1 and the base station 2 may be replaced with other terminal devices that may send a measurement signal of the backscatter.

FIG. 10 is a schematic flowchart of a channel information obtaining method according to an embodiment of this application. As shown in FIG. 10, the method 1000 may be performed by a base station 1, a base station 2, and a backscatter. In other words, the method may be performed by software or hardware installed in the base station 1, the base station 2, and the backscatter. As shown in FIG. 10, the method may include the following steps.

S1001. A base station 1 and a base station 2 determine, through an inter-base station interface (X2 interface), related configuration information of a measurement signal of a backscatter sent by the base station 1.

The related configuration information may include frequency bandwidth of the measurement signal, a time parameter (a start time, an end time, duration, and the like), and sequence information of the measurement signal.

Optionally, the base station 1 and the base station 2 may measure, through an air interface, channel information from the base station 1 to the base station 2 when the backscatter is not working, to eliminate interference on an inter-base station channel in a subsequent channel measurement process of the backscatter.

S 1002. The base station 1 sends a reference signal to measure a channel situation of a backscatter device.

The reference signal is sent within a period of time after a specific wake-up signal. The reference signal lasts for a period of time, and includes several time units. Each time unit corresponds to one element of an OCC code word.

Optionally, before the base station 1 sends the measurement signal, the base station 1 (or another device such as a mobile phone) sends a specific signal to wake up a plurality of backscatter devices.

S 1003. The backscatter device determines an OCC code word according to a device identifier, to ensure that different devices use different OCC code words, and forwards, according to the determined OCC code word, the measurement signal sent by the base station 1.

Optionally, selection of the OCC code word may be jointly determined based on an identifier carried in the wake-up signal and the device identifier of the backscatter.

S 1004. The base station 2 distinguishes different backscatters and/or obtains channel state information of different backscatter devices according to different OCC code words.

The base station 2 determines, by using extracted channel information of the OCC code word, whether the OCC code word has a corresponding backscatter device. If the extracted channel information of the OCC code word is too small, it is considered that no backscatter device uses the OCC code word, that is, no backscatter device corresponds to the OCC code word.

Due to different state switching and transmission delays of the backscatter devices, a specified time interval needs to be used. Therefore, the base station 2 does not use a signal within the time interval as data for channel estimation.

It should be noted that the channel information obtaining method provided in the embodiments of this application may be performed by a channel information obtaining apparatus, or a control module that is in the channel information obtaining apparatus and that is configured to perform the channel information obtaining method. In the embodiments of this application, that the channel information obtaining apparatus performs the channel information obtaining method is used as an example to describe the channel information obtaining apparatus provided in the embodiments of this application.

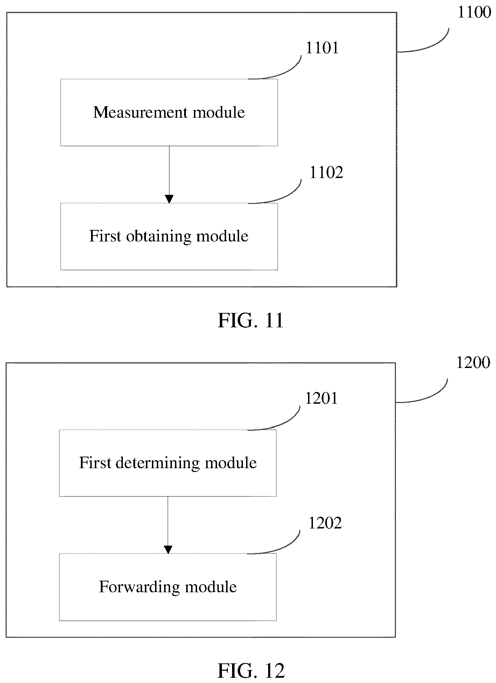

FIG. 11 is a schematic structural diagram of a channel information obtaining apparatus according to an embodiment of this application. An apparatus 1100 may be applied to the foregoing first device. As shown in FIG. 11, the apparatus 1100 may include a measurement module 1101 and a first obtaining module 1102.

In this embodiment of this application, the measurement module 1101 is configured to measure first channel information in a plurality of time units in a first time period; and the first obtaining module 1102 is configured to obtain second channel information of each third device in the first time period according to the first channel information obtained through measurement in each time unit and according to a first code word of each third device in the first time period, where the second channel information is channel information obtained after each third device forwards, to the first device, a radio signal sent by a second device, where the radio signal is forwarded by the third device according to the first code word of the third device in the first time period, the first code word includes a plurality of elements, each element corresponds to one time unit, and first code words of different third devices are different in the first time period.

In a possible implementation, the first obtaining module 1102 is further configured to determine the first code word of each third device in the first time period before the first device measures the first channel information.

In a possible implementation, that the first obtaining module 1102 determines the first code word of each third device in the first time period includes one of the following:

receiving first configuration information sent by the second device, and determining the first code word of each third device in the first time period according to the first configuration information, where the first configuration information includes at least one of the following: a length of the first code word, each to-be-detected first code word, a device identifier of a third device corresponding to each first code word, and a correspondence between an element of the first code word and a target parameter of a forwarding beam of the third device; and
determining the first code word of each third device in the first time period according to the device identifier of each third device.

In a possible implementation, the first configuration information further includes time domain information of the first channel information, and the time domain information is used to indicate the plurality of time units.

In a possible implementation, the target parameter includes at least one of the following: a phase, an amplitude, and a beam, and values of target parameters corresponding to different elements are different.

In a possible implementation, that the first obtaining module 1102 determines the first code word of each third device according to the device identifier of each third device includes:
determining the first code word of each third device according to the device identifier of each third device and an identifier carried in a received wake-up signal, where the wake-up signal is used to wake up at least one third device.

In a possible implementation, the first obtaining module 1102 is further configured to perform joint estimation on second channel information of each third device in a plurality of first time periods to obtain target channel information of each third device.

In a possible implementation, the apparatus further includes a first sending module, configured to send feedback information to the second device in a preset manner, where the feedback information includes at least one of the following: an identifier of the third device, the target channel information of the third device, and a state of a target parameter of the third device corresponding to the target channel information.

In a possible implementation, a time interval between the plurality of time units is greater than a time required for state switching of the third device.

The channel information obtaining apparatus in this embodiment of this application may be an apparatus, or may be a component, an integrated circuit, or a chip in a terminal. The terminal may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application. The base station includes but is not limited to the type of the foregoing listed base station 12.

The channel information obtaining apparatus in this embodiment of this application may be an apparatus with an operating system. The operating system may be an Android (Android) operating system, an iOS operating system, or another possible operating system. This is not specifically limited in this embodiment of this application.

The channel information obtaining apparatus provided in this embodiment of this application can implement the processes implemented by the first device in the method embodiments in FIG. 2 to FIG. 10 and achieve a same technical effect. To avoid repetition, details are not described herein again.

FIG. 12 is a schematic structural diagram of a signal sending apparatus according to an embodiment of this application. The apparatus may be applied to a third device. As shown in FIG. 12, an apparatus 1200 mainly includes a first determining module 1201 and a forwarding module 1202.

In this embodiment of this application, the first determining module 1201 is configured to determine a first code word in a first time period; and the forwarding module 1202 is configured to forward a radio signal from a second device in each time unit in the first time period according to a state corresponding to each element of the first code word, where the first code word includes a plurality of elements, each element corresponds to one time unit, and first code words of different third devices are different in the first time period.

In a possible implementation, that the first determining module 1201 determines a first code word in a first time period includes:

receiving second configuration information sent by the second device, and determining the first code word according to the second configuration information, where the second configuration information includes a time period for executing the first code word, a time unit corresponding to each element of the first code word, a sequence of the first code word, and a target parameter of a forwarding beam during execution of the first code word.

In a possible implementation, that the first determining module 1201 determines a first code word in a first time period includes:

determining the first code word according to a device identifier of the third device.

In a possible implementation, that the first determining module 1201 determines the first code word according to a device identifier of the third device includes:

after a wake-up signal from the second device is received, determining the first code word according to an identifier carried in the wake-up signal and the device identifier of the third device, where the wake-up signal is used to wake up the third device.

The signal sending apparatus provided in this embodiment of this application can implement the processes implemented by the third device in the method embodiments in FIG. 2 to FIG. 10 and achieve a same technical effect. To avoid repetition, details are not described herein again.

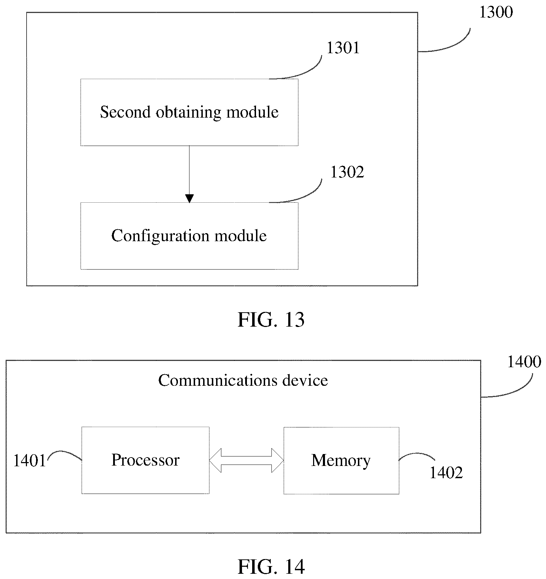

FIG. 13 is a schematic structural diagram of a parameter configuration apparatus according to an embodiment of this application. The apparatus may be applied to a second device. As shown in FIG. 13, an apparatus 1300 mainly includes a second obtaining module 1301 and a configuration module 1302.

In this embodiment of this application, the second obtaining module 1301 is configured to obtain a device parameter of at least one third device; and the configuration module 1302 is configured to configure second configuration information for each third device according to the device parameter of each third device, where the second configuration information includes a time period for executing a first code word, a time unit corresponding to each element of the first code word, a sequence of the first code word, and a target parameter of a forwarding beam during execution of the first code word, and first code words of different third devices are different.

In a possible implementation, that the configuration module 1302 configures second configuration information for each third device according to the device parameter of each third device includes:

selecting a first code word of each third device according to a code word selection rule, and determining a target parameter corresponding to each time unit in a first time period.

In a possible implementation, the apparatus further includes:

a second sending module, configured to send first configuration information to a first device, where the first configuration information includes time domain information of a first reference signal, and the time domain information indicates that a plurality of time units are the same as time units corresponding to elements in the first code word.

In a possible implementation, the apparatus further includes:

a first receiving module, configured to receive the first reference signal in each time unit after the first configuration information is sent to the first device; and

a third obtaining module, configured to obtain third channel information of each third device according to the first reference signal received in each time unit and the first code word of each third device, where the third channel information is channel information obtained after each third device forwards, to the first device, the first reference signal sent by the first device.

In a possible implementation, the first configuration information further includes at least one of the following: a length of the first code word, each to-be-detected first code word, a device identifier of a third device corresponding to each first code word, and a correspondence between an element of the first code word and a target parameter of a transmit beam of the third device.

In a possible implementation, the second sending module is further configured to send the first reference signal in each time unit after the first configuration information is sent to the first device; and the apparatus further includes a second receiving module, configured to receive feedback information sent by the first device, where the feedback information includes at least one of the following: an identifier of the third device, target channel information of the third device, and a state of a target parameter of the third device corresponding to the target channel information.

The parameter configuration apparatus provided in this embodiment of this application can implement the processes implemented by the second device in the method embodiments in FIG. 2 to FIG. 10 and achieve a same technical effect. To avoid repetition, details are not described herein again.

Optionally, as shown in FIG. 14, an embodiment of this application further provides a communication device 1400, including a processor 1401, a memory 1402, and a program or an instruction stored in the memory 1402 and executable on the processor 1401. For example, when the communication device 1400 is a terminal or a network side device, when the program or the instruction is executed by the processor 1401, the processes of the foregoing channel information obtaining method embodiment are implemented, and a same technical effect can be achieved. When the communication device 1400 is a network side device, when the program or the instruction is executed by the processor 1401, the processes of the foregoing parameter configuration method embodiment are implemented, and a same technical effect can be achieved. When the communication device 1400 is a wireless auxiliary device, when the program or the instruction is executed by the processor 1401, the processes of the foregoing signal sending method embodiment are implemented, and a same technical effect can be achieved. To avoid repetition, details are not described herein again.

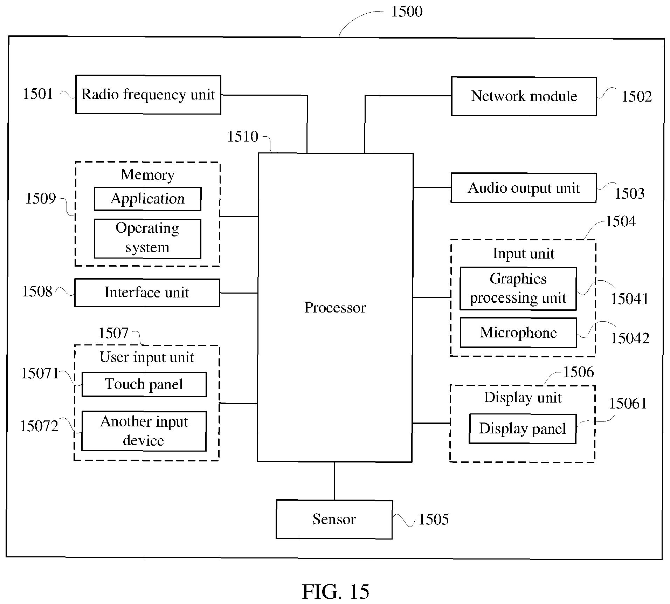

FIG. 15 is a schematic diagram of a hardware structure of a terminal according to an embodiment of this application.

A terminal 1500 includes but is not limited to components such as a radio frequency unit 1501, a network module 1502, an audio output unit 1503, an input unit 1504, a sensor 1505, a display unit 1506, a user input unit 1507, an interface unit 1508, a memory 1509, and a processor 1510.

A person skilled in the art can understand that the terminal 1500 may further include a power supply (such as a battery) that supplies power to each component. The power supply may be logically connected to the processor 1510 by using a power supply management system, to implement functions such as charging and discharging management, and power consumption management by using the power supply management system. The terminal structure shown in FIG. 15 constitutes no limitation on the terminal, and the terminal may include more or fewer components than those shown in the figure, or combine some components, or have different component arrangements. Details are not described herein.

It should be understood that, in this embodiment of this application, the input unit 1504 may include a graphics processing unit (Graphics Processing Unit, GPU) 15041 and a microphone 15042, and the graphics processing unit 15041 processes image data of a still picture or a video obtained by an image capture apparatus (such as a camera) in a video capture mode or an image capture mode. The display unit 1506 may include a display panel 15061. Optionally, the display panel 15061 may be configured in a form such as a liquid crystal display or an organic light-emitting diode. The user input unit 1507 includes a touch panel 15071 and another input device 15072. The touch panel 15071 is also referred to as a touchscreen. The touch panel 15071 may include two parts: a touch detection apparatus and a touch controller. The another input device 15072 may include but is not limited to a physical keyboard, a functional button (such as a volume control button or a power on/off button), a trackball, a mouse, and a joystick. Details are not described herein.

In this embodiment of this application, the radio frequency unit 1501 receives downlink data from a network side device and then sends the downlink data to the processor 1510 for processing; and sends uplink data to the network side device. Usually, the radio frequency unit 1501 includes but is not limited to an antenna, at least one amplifier, a transceiver, a coupler, a low noise amplifier, a duplexer, and the like.

The memory 1509 may be configured to store a software program or an instruction and various data. The memory 1509 may mainly include a program or instruction storage area and a data storage area. The program or instruction storage area may store an operating system, and an application or an instruction required by at least one function (for example, a sound playing function or an image playing function). In addition, the memory 1509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1510 may include one or more processing units. Optionally, an application processor and a modem processor may be integrated into the processor 1510. The application processor mainly processes an operating system, a user interface, an application, an instruction, or the like. The modem processor mainly processes wireless communication, for example, a baseband processor. It can be understood that, alternatively, the modem processor may not be integrated into the processor 1510.

The processor 1510 is configured to: measure first channel information in a plurality of time units in a first time period; and obtain second channel information of each third device in the first time period according to the first channel information obtained through measurement in each time unit and according to a first code word of each third device in the first time period, where the second channel information is channel information obtained after each third device forwards, to the terminal, a radio signal sent by a second device, where the radio signal is forwarded by the third device according to the first code word of the third device in the first time period, the first code word includes a plurality of elements, each element corresponds to one time unit, and first code words of different third devices are different in the first time period.

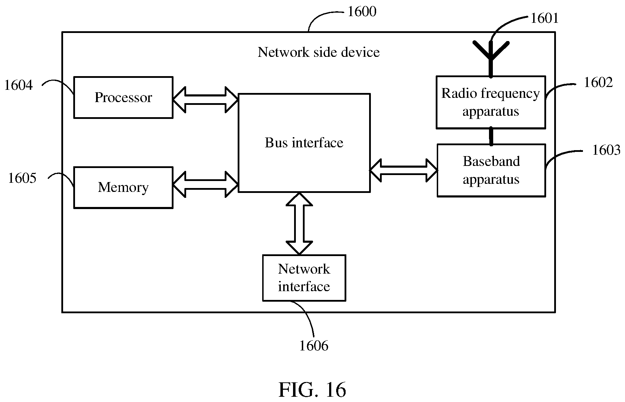

Specifically, an embodiment of this application further provides a network side device. As shown in FIG. 16, a network side device 1600 includes an antenna 1601, a radio frequency apparatus 1602, and a baseband apparatus 1603. The antenna 1601 is connected to the radio frequency apparatus 1602. In an uplink direction, the radio frequency apparatus 1602 receives information by using the antenna 1601, and sends the received information to the baseband apparatus 1603 for processing. In a downlink direction, the baseband apparatus 1603 processes to-be-sent information, and sends the information to the radio frequency apparatus 1602. The radio frequency apparatus 1602 processes the received information and then sends the information by using the antenna 1601.

The frequency band processing apparatus may be located in the baseband apparatus 1603. The method performed by the network side device in the foregoing embodiment may be implemented in the baseband apparatus 1603. The baseband apparatus 1603 includes a processor 1604 and a memory 1605.

The baseband apparatus 1603 may include, for example, at least one baseband board, where a plurality of chips are disposed on the baseband board. As shown in FIG. 16, one chip is, for example, the processor 1604, which is connected to the memory 1605, so as to invoke a program in the memory 1605 to perform operations of the network side device shown in the foregoing method embodiment.

The baseband apparatus 1603 may further include a network interface 1606, configured to exchange information with the radio frequency apparatus 1602. For example, the interface is a common public radio interface (common public radio interface, CPRI for short).

Specifically, the network side device in this embodiment of the present invention further includes an instruction or a program stored in the memory 1605 and executable on the processor 1604. The processor 1604 invokes the instruction or the program in the memory 1605 to perform the method performed by the modules shown in FIG. 11 or FIG. 13, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing channel information obtaining method or the processes of the foregoing signal sending method embodiment or the processes of the foregoing parameter configuration method embodiment are implemented, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to execute a program or an instruction of a network side device to implement the processes of the foregoing channel information obtaining method or the processes of the foregoing signal sending method embodiment or the processes of the foregoing parameter configuration method embodiment, and a same technical effect can be achieved. To avoid repetition, details are not described herein again.

An embodiment of this application further provides a computer program product. The computer program product includes a processor, a memory, and a program or an instruction stored in the memory and executable on the processor, and when the program or the instruction is executed by the processor, the processes of the foregoing channel information obtaining method or the processes of the foregoing signal sending method embodiment or the processes of the foregoing parameter configuration method embodiment are implemented, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

**Claims**

1. A channel information obtaining method, comprising:

   measuring, by a first device, first channel information in a plurality of time units in a first time period; and
   obtaining, by the first device, second channel information of each third device in the first time period according to the first channel information obtained through measurement in each time unit and according to a first code word of each third device in the first time period, wherein the second channel information is channel information obtained after each third device forwards, to the first device, a radio signal sent by a second device, wherein
   the radio signal is forwarded by the third device according to the first code word of the third device in the first time period, the first code word comprises a plurality of elements, each element corresponds to one time unit, and first code words of different third devices are different in the first time period.

2. The method according to claim 1, wherein before the measuring, by a first device, first channel information, the method further comprises:
   determining the first code word of each third device in the first time period.

3. The method according to claim 2, wherein the determining the first code word of each third device in the first time period comprises one of the following:

   receiving first configuration information sent by the second device, and determining the first code word of each third device in the first time period according to the first configuration information, wherein the first configuration information comprises at least one of the following: a length of the first code word, each to-be-detected first code word, a device identifier of a third device corresponding to each first code word, and a correspondence between an element of the first code word and a target parameter of a forwarding beam of the third device; and
   determining the first code word of each third device in the first time period according to the device identifier of each third device.

4. The method according to claim 3, wherein the first configuration information further comprises time domain information of the first channel information, and the time domain information is used to indicate the plurality of time units.

**5.** The method according to claim 3, wherein the target parameter comprises at least one of the following: a phase, an amplitude, and a beam, and values of target parameters corresponding to different elements are different.

**6.** The method according to claim 3, wherein the determining the first code word of each third device according to the device identifier of each third device comprises:
determining the first code word of each third device according to the device identifier of each third device and an identifier carried in a received wake-up signal, wherein the wake-up signal is used to wake up at least one third device.

**7.** The method according to any one of claims 1 to 6, wherein after the obtaining second channel information of each third device in the first time period, the method further comprises:
performing joint estimation on second channel information of each third device in a plurality of first time periods to obtain target channel information of each third device.

**8.** The method according to claim 7, wherein after the obtaining target channel information of each third device, the method further comprises:
sending feedback information to the second device in a preset manner, wherein the feedback information comprises at least one of the following: an identifier of the third device, the target channel information of the third device, and a state of a target parameter of the third device corresponding to the target channel information.

**9.** The method according to any one of claims 1 to 6, wherein a time interval between the plurality of time units is greater than a time required for state switching of the third device.

**10.** A signal sending method, comprising:

determining, by a third device, a first code word in a first time period; and
forwarding, by the third device, a radio signal from a second device in each time unit in the first time period according to a state corresponding to each element of the first code word, wherein the first code word comprises a plurality of elements, each element corresponds to one time unit, and first code words of different third devices are different in the first time period.

**11.** The method according to claim 10, wherein the determining, by a third device, a first code word in a first time period comprises:
receiving, by the third device, second configuration information sent by the second device, and determining the first code word in the first time period according to the second configuration information, wherein the second configuration information comprises a time period for executing the first code word, a time unit corresponding to each element of the first code word, a sequence of the first code word, and a target parameter of a forwarding beam during execution of the first code word.

**12.** The method according to claim 10, wherein the determining, by a third device, a first code word in a first time period comprises:
determining the first code word according to a device identifier of the third device.

**13.** The method according to claim 12, wherein the determining the first code word according to a device identifier of the third device comprises:
after a wake-up signal from the second device is received, determining the first code word according to an identifier carried in the wake-up signal and the device identifier of the third device, wherein the wake-up signal is used to wake up the third device.

**14.** A parameter configuration method, comprising:

obtaining, by a second device, a device parameter of at least one third device; and
configuring, by the second device, second configuration information for each third device according to the device parameter of each third device, wherein the second configuration information comprises a time period for executing a first code word, a time unit corresponding to each element of the first code word, a sequence of the first code word, and a target parameter of a forwarding beam during execution of the first code word, and first code words of different third devices are different.

**15.** The method according to claim 14, wherein the configuring, by the second device, second configuration information for each third device according to the device parameter of each third device comprises:
selecting a first code word of each third device according to a code word selection rule, and determining a target parameter corresponding to each time unit in a first time period.

**16.** The method according to claim 14, wherein after the obtaining, by a second device, a device parameter of at least one third device, the method further comprises:
sending first configuration information to a first device, wherein the first configuration information comprises time domain information of a first reference signal, and the time domain information indicates that a plurality of time units are same as time units corresponding to elements in the first code word.

**17.** The method according to claim 16, wherein after the sending first configuration information to a first device, the method further comprises:

receiving the first reference signal in each time unit; and

obtaining third channel information of each third device according to the first reference signal received in each time unit and the first code word of each third device, wherein the third channel information is channel information obtained after each third device forwards, to the first device, the first reference signal sent by the first device.

**18.** The method according to claim 16, wherein the first configuration information further comprises at least one of the following: a length of the first code word, each to-be-detected first code word, a device identifier of a third device corresponding to each first code word, and a correspondence between an element of the first code word and a target parameter of a transmit beam of the third device.

**19.** The method according to claim 18, wherein after the sending first configuration information to a first device, the method further comprises:

sending the first reference signal in each time unit; and

receiving feedback information sent by the first device, wherein the feedback information comprises at least one of the following: an identifier of the third device, target channel information of the third device, and a state of a target parameter of the third device corresponding to the target channel information.

**20.** A channel information obtaining apparatus, wherein the apparatus is applied to a first device and comprises:

a measurement module, configured to measure first channel information in a plurality of time units in a first time period; and

a first obtaining module, configured to obtain second channel information of each third device in the first time period according to the first channel information obtained through measurement in each time unit and according to a first code word of each third device in the first time period, wherein the second channel information is channel information obtained after each third device forwards, to the first device, a radio signal sent by a second device, wherein

the radio signal is forwarded by the third device according to the first code word of the third device in the first time period, the first code word comprises a plurality of elements, each element corresponds to one time unit, and first code words of different third devices are different in the first time period.

**21.** The apparatus according to claim 20, wherein the first obtaining module is further configured to determine the first code word of each third device in the first time period before the first device measures the first channel information.

**22.** The apparatus according to claim 21, wherein that the first obtaining module determines the first code word of each third device in the first time period comprises one of the following:

receiving first configuration information sent by the second device, and determining the first code word of each third device in the first time period according to the first configuration information, wherein the first configuration information comprises at least one of the following: a length of the first code word, each to-be-detected first code word, a device identifier of a third device corresponding to each first code word, and a correspondence between an element of the first code word and a target parameter of a forwarding beam of the third device; and determining the first code word of each third device in the first time period according to the device identifier of each third device.

**23.** The apparatus according to claim 22, wherein the first configuration information further comprises time domain information of the first channel information, and the time domain information is used to indicate the plurality of time units.

**24.** The apparatus according to claim 22, wherein the target parameter comprises at least one of the following: a phase, an amplitude, and a beam, and values of target parameters corresponding to different elements are different.

**25.** The apparatus according to claim 22, wherein that the first obtaining module determines the first code word of each third device according to the device identifier of each third device comprises:
determining the first code word of each third device according to the device identifier of each third device and an identifier carried in a received wake-up signal, wherein the wake-up signal is used to wake up at least one third device.

**26.** The apparatus according to any one of claims 20 to 25, wherein the first obtaining module is further configured to perform joint estimation on second channel information of each third device in a plurality of first time periods to obtain target channel information of each third device.

27. The apparatus according to claim 26, wherein the apparatus further comprises:
a first sending module, configured to send feedback information to the second device in a preset manner, wherein the feedback information comprises at least one of the following: an identifier of the third device, the target channel information of the third device, and a state of a target parameter of the third device corresponding to the target channel information.

28. The apparatus according to any one of claims 20 to 25, wherein a time interval between the plurality of time units is greater than a time required for state switching of the third device.

29. A signal sending apparatus, wherein the apparatus is applied to a third device and comprises:

a first determining module, configured to determine a first code word in a first time period; and
a forwarding module, configured to forward a radio signal from a second device in each time unit in the first time period according to a state corresponding to each element of the first code word, wherein the first code word comprises a plurality of elements, each element corresponds to one time unit, and first code words of different third devices are different in the first time period.

30. The apparatus according to claim 29, wherein that a first determining module determines a first code word in a first time period comprises:
receiving second configuration information sent by the second device, and determining the first code word according to the second configuration information, wherein the second configuration information comprises a time period for executing the first code word, a time unit corresponding to each element of the first code word, a sequence of the first code word, and a target parameter of a forwarding beam during execution of the first code word.

31. The apparatus according to claim 29, wherein that a first determining module determines a first code word in a first time period comprises:
determining the first code word according to a device identifier of the third device.

32. The apparatus according to claim 31, wherein that the first determining module determines the first code word according to a device identifier of the third device comprises:
after a wake-up signal from the second device is received, determining the first code word according to an identifier carried in the wake-up signal and the device identifier of the third device, wherein the wake-up signal is used to wake up the third device.

33. A parameter configuration apparatus, wherein the apparatus is applied to a second device and comprises:

a second obtaining module, configured to obtain a device parameter of at least one third device; and
a configuration module, configured to configure second configuration information for each third device according to the device parameter of each third device, wherein the second configuration information comprises a time period for executing a first code word, a time unit corresponding to each element of the first code word, a sequence of the first code word, and a target parameter of a forwarding beam during execution of the first code word, and first code words of different third devices are different.

34. The apparatus according to claim 33, wherein that a configuration module configures second configuration information for each third device according to the device parameter of each third device comprises: selecting a first code word of each third device according to a code word selection rule, and determining a target parameter corresponding to each time unit in a first time period.

35. The apparatus according to claim 33, wherein the apparatus further comprises:
a second sending module, configured to send first configuration information to a first device, wherein the first configuration information comprises time domain information of a first reference signal, and the time domain information indicates that a plurality of time units are the same as time units corresponding to elements in the first code word.

36. The apparatus according to claim 35, wherein the apparatus further comprises:

a first receiving module, configured to receive the first reference signal in each time unit after the first configuration information is sent to the first device; and
a third obtaining module, configured to obtain third channel information of each third device according to the first reference signal received in each time unit and the first code word of each third device, wherein the third channel information is channel information obtained after each third device forwards, to the first device, the first reference signal sent by the first device.

**37.** The apparatus according to claim 35, wherein the first configuration information further comprises at least one of the following: a length of the first code word, each to-be-detected first code word, a device identifier of a third device corresponding to each first code word, and a correspondence between an element of the first code word and a target parameter of a transmit beam of the third device.

**38.** The apparatus according to claim 37, wherein

the second sending module is further configured to send the first reference signal in each time unit after the first configuration information is sent to the first device; and
the apparatus further comprises a second receiving module, configured to receive feedback information sent by the first device, wherein the feedback information comprises at least one of the following: an identifier of the third device, target channel information of the third device, and a state of a target parameter of the third device corresponding to the target channel information.

**39.** A communication device, comprising a processor, a memory, and a program or an instruction stored in the memory and executable on the processor, wherein when the program or the instruction is executed by the processor, the steps of the channel information obtaining method according to any one of claims 1 to 9 are implemented, or the steps of the signal sending method according to any one of claims 10 to 13 are implemented, or the steps of the parameter configuration method according to any one of claims 14 to 19 are implemented.

**40.** A readable storage medium, wherein the readable storage medium stores a program or an instruction, and when the program or the instruction is executed by a processor, the steps of the channel information obtaining method according to any one of claims 1 to 9 are implemented, or the steps of the signal sending method according to any one of claims 10 to 13 are implemented, or the steps of the parameter configuration method according to any one of claims 14 to 19 are implemented.

**41.** A chip, wherein the chip comprises a processor and a communication interface, the communication interface is coupled to the processor, and the processor is configured to execute a program or an instruction of a communication device to implement the steps of the channel information obtaining method according to any one of claims 1 to 9, or implement the steps of the signal sending method according to any one of claims 10 to 13, or implement the steps of the parameter configuration method according to any one of claims 14 to 19.

FIG. 1

200

S210

A first device measures first channel information in a plurality of time units in a first time period

S212

The first device obtains second channel information of each third device in the first time period according to the first channel information obtained through measurement in each time unit and according to a first code word of each third device in the first time period

FIG. 2

300

S310

A third device determines a first code word in a first time period

S312

The third device forwards a radio signal from a second device in each time unit in the first time period according to a state corresponding to each element of the first code word

FIG. 3

400

S410

A second device obtains a device parameter of at least one third device

S412

The second device configures second configuration information for each third device according to the device parameter of each third device

FIG. 4

500

Base station     Intelligent surface device     Terminal

S501

S502

S503

S504     S504

S504     S504

S505

FIG. 5

Joint estimation

Time unit     Time interval

Channel measurement time period of an intelligent surface

Time

| State of an intelligent surface device 1 | + | + | −1 | −1 |
|---|---|---|---|---|
| State of an intelligent surface device 2 | + | −1 | + | −1 |

FIG. 6

700

| Base station | Intelligent surface device | Terminal |

S701

S702

S703

S704

S704

S704

S704

S704

FIG. 7

800

| Base station transmit end | | Intelligent surface device | | Base station receive end |

S801

S802

S803

S804

FIG. 8

FIG. 9

<u>1000</u>

FIG. 10

1100

1101

Measurement module

1102

First obtaining module

FIG. 11

1200

1201

First determining module

1202

Forwarding module

FIG. 12

1300

1301

Second obtaining module

1302

Configuration module

FIG. 13

1400

Communications device

1401 Processor ⟺ Memory 1402

FIG. 14

1500

FIG. 15

FIG. 16

| INTERNATIONAL SEARCH REPORT | International application No. |
| --- | --- |
| | **PCT/CN2022/077271** |

**A. CLASSIFICATION OF SUBJECT MATTER**

H04B 7/04(2017.01)i;  H04L 25/02(2006.01)i

According to International Patent Classification (IPC) or to both national classification and IPC

**B. FIELDS SEARCHED**

Minimum documentation searched (classification system followed by classification symbols)

    H04B; H04L

Documentation searched other than minimum documentation to the extent that such documents are included in the fields searched

Electronic data base consulted during the international search (name of data base and, where practicable, search terms used)

    CNTXT; WPABS; WPABSC; VEN; ENTXT; ENTXTC; CNKI; 3GPP; IEEE: 中继, 转发, 信道估计, 信道状态信息, 码字, 正交掩码, 码分复用, 参考信号, RN, CoMP, channel estimation, CQI, code, OOC, CDM, RS

**C. DOCUMENTS CONSIDERED TO BE RELEVANT**

| Category* | Citation of document, with indication, where appropriate, of the relevant passages | Relevant to claim No. |
| --- | --- | --- |
| Y | CN 102577286 A (RESEARCH IN MOTION LTD.) 11 July 2012 (2012-07-11) description, paragraphs [0021]-[0069], and figures 1-13 | 1-9, 20-28, 39-41 |
| Y | CN 103733552 A (INTERDIGITAL PATENT HOLDINGS, INC.) 16 April 2014 (2014-04-16) description paragraphs [0044]-[0133], figures 1-5F | 1-9, 20-28, 39-41 |
| X | CN 103733552 A (INTERDIGITAL PATENT HOLDINGS, INC.) 16 April 2014 (2014-04-16) description paragraphs [0044]-[0133], figures 1-5F | 10-19, 29-41 |
| X | CN 102882566 A (HUAWEI TECHNOLOGIES CO., LTD.) 16 January 2013 (2013-01-16) description, paragraphs [0024]-[0093], and figures 1-8 | 10-19, 29-41 |
| A | CN 101521902 A (HUAWEI TECHNOLOGIES CO., LTD.) 02 September 2009 (2009-09-02) entire document | entire document |
| A | US 2015249526 A1 (LG ELECTRONICS INC.) 03 September 2015 (2015-09-03) entire document | entire document |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 April 2022** | **29 April 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/077271**

| Patent document cited in search report | | | Publication date (day/month/year) | Patent family member(s) | | | Publication date (day/month/year) |
|---|---|---|---|---|---|---|---|
| CN | 102577286 | A | 11 July 2012 | WO | 2011019959 | A1 | 17 February 2011 |
| | | | | EP | 2465236 | A1 | 20 June 2012 |
| | | | | US | 2013064169 | A1 | 14 March 2013 |
| | | | | CA | 2770708 | A1 | 17 February 2011 |
| | | | | CN | 102577286 | B | 20 January 2016 |
| | | | | US | 9270496 | B2 | 23 February 2016 |
| | | | | CA | 2770708 | C | 11 October 2016 |
| | | | | EP | 2465236 | B1 | 09 May 2018 |
| CN | 103733552 | A | 16 April 2014 | WO | 2013023093 | A2 | 14 February 2013 |
| | | | | US | 2015304014 | A1 | 22 October 2015 |
| | | | | TW | 201322676 | A | 01 June 2013 |
| | | | | EP | 2742659 | A2 | 18 June 2014 |
| | | | | KR | 20140064858 | A | 28 May 2014 |
| | | | | JP | 2014529226 | A | 30 October 2014 |
| | | | | WO | 2013023093 | A3 | 25 April 2013 |
| CN | 102882566 | A | 16 January 2013 | None | | | |
| CN | 101521902 | A | 02 September 2009 | None | | | |
| US | 2015249526 | A1 | 03 September 2015 | WO | 2013005986 | A2 | 10 January 2013 |
| | | | | EP | 2731284 | A2 | 14 May 2014 |
| | | | | WO | 2013005986 | A3 | 14 March 2013 |
| | | | | EP | 2731284 | A4 | 11 March 2015 |
| | | | | US | 9313000 | B2 | 12 April 2016 |
| | | | | EP | 2731284 | B1 | 18 April 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110201300